# FASCICULE DE BREVET EUROPEEN

(11) **EP 1 075 348 B1**
(45) Date de publication et mention de la délivrance du brevet: **03.04.2002**
(21) Numéro de dépôt: 99915842.1
(22) Date de dépôt: 27.04.1999
(51) Int. Cl.: B23Q 1/54

(54) **SYSTEME COMPENSATEUR POUR HEXAPODE**
AUSGLEICHSANORDNUNG EINES HEXAPODS
COMPENSATING SYSTEM FOR HEXAPOD

(30) Priorité: 27.04.1998 FR 9805682
(43) Date de publication de la demande: 14.02.2001
(73) Titulaire: Constructions Mécaniques des Vosges, 88320 Rozières sur Mouzon (FR)
(72) Inventeur: WILDENBERG, François, F-88140 Contrexéville (FR)
(74) Mandataire: Poupon, Michel
(86) Numéro de dépôt international: FR9900990
(87) Numéro de publication internationale: WO9955488

(56) Documents cités:
- EP-A- 0 834 383
- EP-B- 0 489 857
- WO-A-95/20747
- FR-A- 2 549 916
- US-A- 5 354 158
- US-A- 5 681 981
- "IMPEDANCE CONTROLLED SURFACE" RESEARCH DISCLOSURE, no. 328, 1 août 1991, page 586 XP000217890

## Description

La présente invention concerne un perfectionnement pour hexapode.

Un hexapode est par exemple un sous-ensemble d'une machine-outil servant à positionner un outil par rapport à une pièce à usiner, comprenant deux plateaux espacés reliés entre-eux par six jambes extensibles et articulées permettant de faire varier à volonté la position relative du plateau actif par rapport à celle du plateau socle.

Le positionnement et le déplacement des jambes de l'hexapode sont pilotés par ordinateur.

Un hexapode de ce type est par exemple décrit dans le document EP 0 489 857.

Des hexapodes sont utilisés dans d'autres applications, par exemple dans les mesures physiques.

L'idée inventive générale. ou le problème posé, est de trouver un moyen qui permette de diminuer ou compenser les contraintes sur l'ensemble des éléments de l'hexapode, et en particulier sur les jambes et les articulations.

Ce problème est résolu par l'invention qui consiste en un hexapode, par exemple un hexapode servant à positionner un outil par rapport à une pièce à usiner, comprenant deux plateaux espacés reliés entre-eux par six jambes extensibles et articulées permettant de faire varier à volonté la position relative du plateau mobile par rapport à celle du plateau-socle, caractérisé en ce qu'il est équipé d'un moyen de diminution-compensation des contraintes sur l'un au moins des éléments de l'hexapode, consistant en un vérin maintenu par un bâti fixe et supportant la masse embarquée sur le plateau mobile.

Selon un exemple de réalisation le vérin est disposé verticalement et sa tige est fixée à la périphérie du plateau mobile.

Selon un autre exemple de réalisation, le vérin n'est pas disposé verticalement et sa force compensatrice est transmise par une poulie de renvoi au point d'accrochage du plateau mobile

Selon un autre exemple de réalisation, la tige du vérin commande un bras mobile relié au plateau mobile.

Selon un autre exemple de réalisation, le vérin exerce une force compensatrice décalée selon l'axe z du repère antérieur du plateau.

En outre, la stratégie d'accès de l'hexapode peut être pilotée par un logiciel définissant au moins un critère de limitation d'effort.

Enfin, l'hexapode peut être équipé d'au moins une liaison articulée avec le compensateur mécanique.

On comprendra mieux l'invention à l'aide de la description qui suite faite en référence aux figures annexées suivantes :
- **figure 1a :** schéma de principe d'un premier mode de compensation mécanique (S₁), non limitatif de l'invention, appliqué à un hexapode à axe principal sensiblement horizontal,
- **figures 1b et 1c :** schéma de principe de variantes de réalisation du mode de réalisation de la figure 1,
- **figure 2:** croquis montrant les mouvements possibles du plateau mobile d'un hexapode,
- **figures 3a, 3b et 3c** : croquis montrant les possibilités de relier le compensateur mécanique et le plateau mobile par une articulation.

Une première solution au problème posé est d'agir sur la stratégie d'accès à un point de la trajectoire de l'outil.

En général, un hexapode a six degrés de liberté. Or, nous n'en utilisons que cinq. En effet, l'arc de rotation de l'électrobroche est dans la majorité des cas inutilisé.

Il y a donc une infinité de longueur de jambe pour atteindre un point de la trajectoire de l'outil.

Dans cette infinité, nous choisissons les longueurs de jambes grâce à une stratégie d'accès pilotée par ordinateur et qui définit des critères pris isolément ou en cascade, par exemple :
- rester dans les limites des courses de chaque jambe,
- rester dans les limites des angulations,
- limiter les efforts,
- obtenir la rigidité souhaitée,
- obtenir la précision souhaitée,
- garder une orientation autour de l'axe broche constante.

Une première solution au problème posé consiste à diminuer les contraintes par pilotage informatique d'un au moins des critères d'accès à un point de la trajectoire. Cette solution fait l'objet d'un développement purement informatique.

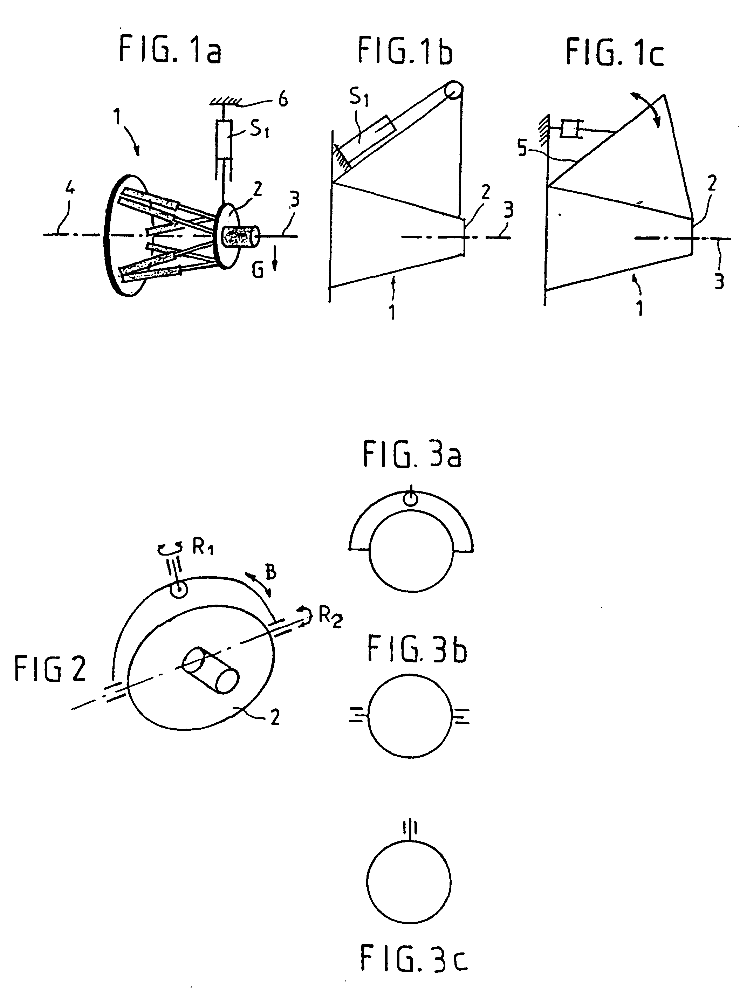

Une deuxième solution consiste à utiliser un ou des moyens mécaniques de compensation, différents modes de réalisation sont décrits ci-après en liaison avec les figures 1a à 1c.

Selon le premier mode de réalisation des figures 1a, 1b, 1c applicable à un hexapode (1) disposé horizontalement, celui-ci est équipé d'un moyen de compensation mécanique formé d'un vérin (S₁), hydraulique ou pneumatique, de puissance constante, supportant la masse embarquée sur le plateau mobile (2).

A cet effet, sur la première variante de réalisation de la figure la, le vérin (S₁) est disposé verticalement dans le plan du plateau mobile (2), les références (3 et 4) désignant respectivement l'axe de la broche et l'axe principal horizontal de l'hexapode.

Le corps du vérin (S₁) est maintenu par un bâti fixe (6) et les risques de collision entre la tige et le plateau imposent que la fixation de la tige se fasse à la périphérie de l'organe terminal ou plateau mobile (2).

Le vérin possède une course suffisante afin d'accepter toutes les variations de situation du plateau, tant en position qu'en orientation. Il est important de disposer de débits en air confortables (orifices du vérin, tailles du distributeur et du régulateur de pression) pour que les variations de volume de la chambre du vérin n'entraînent pas de charges supplémentaires.

L'ajout d'un vérin compensateur d'efforts selon ce premier mode de réalisation ou de ses variantes permet de recentrer les plages de travail de chaque jambe sur les plages de charges acceptées par les actionneurs électriques, et a pour effet bénéfique de diminuer les valeurs des charges extrêmes.

Cette technique possède aussi des avantages :
- technologie simple à mettre en oeuvre,
- fiabilité des vérins pneumatiques éprouvée,
- le vérin compensateur pourra aussi servir d'aide au montage / démontage de la tête hexapode sur le centre d'usinage.

Afin de simplifier l'accroche du compensateur, il est possible :
- d'imposer au plateau mobile de garder deux axes parallèles (la rotation autour de l'axe de la broche est alors supprimée),
- de prévoir une accroche qui supporte toutes les inclinaisons du plateau mobile. Ces inclinaisons résultent des mouvements rappelés sur le croquis de la figure 7. à savoir :
   . rotation (R₁) autour de la broche,
   . rotation (R₂) autour d'un axe horizontal,
   . basculement (B) dans un plan vertical.

Des essais ont permis de déterminer d'une part un point d'application de la force compensatrice du vérin et de figer sa norme, d'autre part de déterminer une force compensatrice optimum dudit vérin.

A titre d'exemple non limitatif, pour un vérin de 800 mm de course, on peut choisir une force compensatrice optimale de 3500 N en un point situé à la périphérie du plateau mobile et décalé de 6 mm selon l'axe (z) du repère cartésien (x,y,z) du plateau.

Selon une variante de réalisation représentée à la figure 1b, le vérin (S₁) n'est pas disposé verticalement et sa force compensatrice est transmise par une poulie de renvoi au point d'accrochage du plateau mobile (2).

Selon une autre variante de réalisation représentée à la figure 1c, la tige du vérin commande un bras mobile (5) relié au plateau mobile (2).

Enfin, une autre solution consiste à combiner un mode de compensation informatique de la stratégie d'accès avec le mode de compensation mécanique, par exemple l'un des compensateurs décrits ci-dessus.

Afin de faciliter le mouvement du plateau (soutenu par le compensateur) en fonction ou non de la stratégie d'accès, on peut prévoir d'équiper l'hexapode d'une liaison articulée avec le compensateur.

Cette liaison articulée peut être prévue au niveau de la rotation autour de la broche (figure 3a) au niveau des inclinaisons du plateau (figure 3b, 3c).

Ces trois articulations peuvent être combinées entre-elles.

Afin d'améliorer le pilotage, les gains de l'automatisme pourront être pilotés en fonction des longueurs de jambe et/ou des vitesses.

Enfin, les pressions dans le compensateur pourront aussi être pilotées en fonction de ces facteurs.

Bien entendu. l'invention s'applique même si l'hexapode est disposé sensiblement horizontalement ou sensiblement verticalement.

## Revendications

1. Hexapode, par exemple un hexapode disposé horizontalement servant à positionner un outil par rapport à une pièce à usiner, comprenant deux plateaux espacés reliés entre eux par six jambes extensibles et articulées permettant de faire varier à volonté la position relative du plateau mobile (2) par rapport à celle du plateau-socle, **caractérisé en ce qu'**il est équipé d'un moyen de diminution-compensation des contraintes sur l'un au moins des éléments de l'hexapode, consistant en un vérin (S₁) maintenu par un bâti fixe (6) et supportant la masse embarquée sur le plateau mobile (2).

2. Hexapode selon la revendication 1, **caractérisé en ce que** le vérin (S₁) est disposé verticalement et sa tige est fixée à la périphérie du plateau mobile (2).

3. Hexapode selon la revendication 2, **caractérisé en ce que** le vérin (S₁) n'est pas disposé verticalement et sa force compensatrice est transmise par une poulie de renvoi au point d'accrochage du plateau mobile (2).

4. Hexapode selon la revendication 1, **caractérisé en ce que** la tige du vérin (S₁) commande un bras mobile (5) relié au plateau mobile (2).

5. Hexapode selon l'une des revendications 1 à 4, **caractérisé en ce que** le vérin exerce une force compensatrice décalée selon l'axe z du repère antérieur du plateau.

6. Hexapode selon l'une des revendications 1 à 5, **caractérisé en ce que** sa stratégie d'accès est pilotée par un logiciel définissant au moins un critère de limitation d'effort.

7. Hexapode selon l'une des revendications 1 à 6, **caractérisé en ce que** l'hexapode est équipé d'au moins une liaison articulée avec le compensateur mécanique.

## Patentansprüche

1. Sechsfüßer, beispielsweise ein horizontal angeordneter Sechsfüßer, der dazu dient, ein Werkzeug in Bezug auf ein zu bearbeitendes Teil zu positionieren und welcher zwei Platten aufweist, die auf Abstand zueinander durch sechs ausziehbare, gelenkige Beine derart verbunden sind, dass auf Wunsch die Position der beweglichen Platte (2) relativ zur Grundplatte verändert werden kann, **dadurch gekennzeichnet, dass** er mit einem Mittel zum Vermindern und Kompensieren der Spannung auf zumindest einem der Bauteile des Sechsfüßers ausgestattet ist, welches aus einem Hubzylinder (S₁) besteht, der von einem ortsfesten Tragteil (6) gehalten wird und die Masse abstützt, mit der die bewegliche Platte (2) belastet wird.

2. Sechsfüßer nach Anspruch 1, **dadurch gekennzeichnet, dass** der Hubzylinder (S₁) senkrecht ausgerichtet ist und seine Kolbenstange mit dem Rand der beweglichen Platte (2) verbunden ist.

3. Sechsfüßer nach Anspruch 2, **dadurch gekennzeichnet, dass** der Hubzylinder (S₁) nicht senkrecht ausgerichtet ist und seine Ausgleichskraft über eine Umlenkrolle zu dem Aufhängepunkt der beweglichen Platte (2) übertragen wird.

4. Sechsfüßer nach Anspruch 1, **dadurch gekennzeichnet, dass** die Kolbenstange des Hubzylinders (S₁) einen beweglichen Arm (5) steuert, der mit der beweglichen Platte (2) verbunden ist.

5. Sechsfüßer nach einem der Ansprüche 1 bis 4, **dadurch gekennzeichnet, dass** der Hubzylinder entsprechend der vorangegangenen Verschiebung der Achse z auf die Platte eine versetzte Ausgleichskraft ausübt.

6. Sechsfüßer nach einem der Ansprüche 1 bis 5, **dadurch gekennzeichnet, dass** seine Zugriffsstrategie von einer Software gesteuert wird, welche zumindest ein Kriterium zur Begrenzung der Kraft festlegt.

7. Sechsfüßer nach einem der Ansprüche 1 bis 6, **dadurch gekennzeichnet, dass** der Sechsfüßer mit zumindest einer gelenkigen Verbindung mit dem mechanischen Kompensator ausgestattet ist.

## Claims

1. Hexapod, for example a horizontally disposed hexapod serving to position a tool in relation to a piece to be machined, comprising two spaced-apart plates, which are interconnected by six extensible and hinged legs, which permit the relative position of the displaceable plate (2) to be varied at will in relation to the position of the base plate, **characterised in that** it is fitted with a means for diminishing and compensating for the constraints on at least one of the elements of the hexapod, consisting of a jack (S₁) maintained by a fixed structure (6) and supporting the mass loaded onto the displaceable plate (2).

2. Hexapod according to claim 1, **characterised in that** the jack (S₁) is disposed vertically, and its spindle is secured to the periphery of the displaceable plate (2).

3. Hexapod according to claim 2, **characterised in that** the jack (S₁) is not disposed vertically, and its compensating force is transmitted by a return pulley to the attachment point of the displaceable plate (2).

4. Hexapod according to claim 1, **characterised in that** the spindle of jack (S₁) controls a displaceable arm (5) connected to the displaceable plate (2).

5. Hexapod according to one of claims 1 to 4, **characterised in that** the jack exerts a compensating force offset along the axis z of the previous reference point of the plate.

6. Hexapod according to one of claims 1 to 5, **characterised in that** its strategy of access is directed by software which defines at least one force limiting criterion.

7. Hexapod according to one of claims 1 to 6, **characterised in that** the hexapod is fitted with at least one connection hinged with the mechanical compensator.
